# EUROPEAN PATENT APPLICATION

(11) **EP 1 598 411 A1**
(43) Date of publication of application: **23.11.2005**
(21) Application number: 05007859.1
(22) Date of filing: 11.04.2005
(51) Int. Cl.: C10G 35/085, C10G 59/02

(54) **Process for production of high-octane gasoline**

(30) Priority: 18.05.2004 DK 200400795
(71) Applicant: Haldor Topsoe A/S, 2800 Kgs. Lyngby (DK)
(72) Inventor: Houzvicka, Jindrich, Turnov, CS-511 01 (CZ)

(57) **Abstract**

The invention provides a process for production of high-octane gasoline from a C₆-C₁₀ hydrocarbon feed stream by selective dehydrogenation of cycloparaffins without substantially affecting aromatics and paraffins present in the feed. It involves a catalyst comprising a Group VIII metal supported on a substantially non-acidic porous material with concentration of acidic sites lower than 1 µmole/g.

The catalyst in the selective dehydrogenation typically comprises palladium, platinum, rhodium, iridium or mixtures thereof in an amount of 0.1 wt% to 1.0 wt% supported on a carrier material selected from silica, alumina, zirconia, titania, or mixtures thereof, other oxides, carbons, carbides and nitrides.

The process for the production of high-octane gasoline from a C₆-C₁₀ hydrocarbon feed can be a combination of a catalytic dehydrogenation step, a catalytic isomerisation step and one or more separation steps.

## Description

### 1 Field of the Invention

The invention relates to a process for upgrading a C₆-C₁₀ paraffin/cycloparaffin refinery stream.

The invention is specifically directed to a process for selective dehydrogenation of C₆-C₁₀ cycloparaffins in presence of C₆-C₁₀ paraffins and aromatics for use in high octane gasoline.

### 2 Description of related Art

The C₆-C₁₀ fraction of crude oil consists basically of three main groups of components: aromatics, linear or mono-branched paraffins and cycloparaffins. While aromatics are valuable gasoline blending components due to their high octane numbers, the octane numbers of the components in the other groups are too low to be used without upgrading.

A process for upgrading gasoline-type hydrocarbon mixtures to fuels having a higher octane rating is disclosed in US patent No. 4,644,089, where alkanes and cyclo-alkanes are converted to alkenes, aromatics and hydrogen in presence of a catalyst, which comprises vanadium oxide and aluminum phosphate. However, alkenes are not desired components of a high octane gasoline, further, the catalyst deactivates and a reactivation process is disclosed as well.

In US patent No. 6,338,791 a process for producing high octane number gasoline is described. The process is a hydroisomerisation of C₅ - C₈ cuts comprising paraffinic, naphthenic, aromatic and olefinic hydrocarbons followed by at least one separation and a recycling of low octane number paraffins. The process converts straight chain paraffins to branched paraffins, however, nothing is mentioned about cycloalkanes.

In the description of US patent No. 4,607,129, a catalytic conversion of alkanes up to C₂₀ is disclosed, which upgrades a gasoline type hydrocarbon mixture. The catalyst comprises vanadium oxides and silica, and it converts cycloalkanes and cycloalkenes and aromatic hydrocarbons by reforming. However, alkenes do not increase octane number of gasoline.

A catalyst for conversion of hydrocarbons into aromatics is described in US patent No. 6,007,700, where the conversion is a reforming process and the catalyst comprises alumina, a doping metal, a noble metal, a promoter metal and a halogen. By this method, hydrocarbons are converted into aromatics, however, some cracking also occurs.

EP 1 233 050 discloses a process for upgrading naphtha by increasing the content of aromatics. The process involves dehydrogenation of paraffins to olefins and further dehydrogenation of cycloparaffins in this mixture to aromatic compounds. The aim of this process is to create aromatics, the catalyst, which is used for the aromatization, is a catalyst on a refractory support, which provides acid sites for cracking, isomerization and cyclozation.

This means that C₆-C₁₀ fraction is currently mostly processed by catalytic reforming, where majority of the feed is converted to aromatics. There are three disadvantages of this solution. First, aromatics are very health-hazardous compounds and their maximum content is under legislation pressure. Second, aromatics are the densest compounds out of the three groups. Aromatisation of paraffins and cycloparaffins results in a significant volumetric shrinkage of up to 25%, which decreases economic benefit of the process. Third, volumetric yield is further decreased by low selectivity of aromatisation of shorter paraffins. C₆ paraffins in particular tend to crack to gas under the reaction conditions used in the reforming process.

Due to economy reasons, the most efficient solution would be to up-grade only cycloparaffins to aromatics, while the paraffinic fraction is converted by isomerisation to multi-branched isomers. However, paraffins are very susceptible to cracking under the typical conditions during such reactions at elevated temperatures.

It has now been found that process conditions and catalyst subjected to this invention allow selective dehydrogenation of cycloparaffins in presence of branched paraffins without their dehydrogenation or cracking to gas.

### SUMMARY OF THE INVENTION

The invention provides a process for production of high-octane gasoline from a C₆-C₁₀ hydrocarbon feed stream by selective dehydrogenation of cycloparaffins without substantially affecting aromatics and paraffins present in the feed. It involves a catalyst comprising a Group VIII metal supported on a substantially non-acidic porous material with concentration of acidic sites lower than 1 µmole/g.

The catalyst in the selective dehydrogenation typically comprises palladium, platinum, rhodium, iridium or mixtures thereof in an amount of 0.1 to 1.0 wt% supported on a carrier material selected from silica, alumina, zirconia, titania or mixtures thereof, other oxides, carbons, carbides and nitrides.

The process for the production of high-octane gasoline from a C₆-C₁₀ hydrocarbon feed can be a combination of a catalytic dehydrogenation step, a catalytic isomerisation step and one or more separation steps.

### BRIEF DESCRIPTION OF THE DRAWINGS

FIG 1 is a schematic flow sheet showing a process for producing high RON gasoline from a feed containing low amounts of aromatics.
FIG 2 is a schematic flow sheet showing a process for producing high RON gasoline from a feed containing large amounts of cyclic compounds.

### DETAILED DESCRIPTION OF THE INVENTION

The main object of the invention is to increase the octane number of a C₆-C₁₀ hydrocarbon mixture by dehydrogenation of cycloparaffins.

The invention comprises a process, its process conditions and catalyst suitable for selective conversion of cycloparaffins to aromatics and hydrogen in presence of paraffins.

The paraffins must not be affected by the dehydrogenation reaction. However, they may be converted to high-octane multi-branched isomers by other processes already known in the art. Consequently, any reaction of paraffins during the dehydrogenation step is undesired.

Multi-branched isomers are defined as compounds containing more than one carbon atom having more than one side chain on the main hydrocarbon chain. Mono-branched isomers are defined as compounds having solely one such side chain.

Dehydrogenation according to the invention proceeds selectively without affecting paraffins present in feed when involving a catalyst comprising a Group VIII metal supported on a substantially non-acidic porous material with concentration of acidic sites lower than 1 µmole/g as e.g. determined by known ammonia TPD desorption.

The invention is suitable for a process with a C₆ - C₁₀ hydrocarbon fraction feed consisting mainly of aromatics, paraffins and cycloparaffins. The feed might originate from distillation of crude oil, from hydro cracking or from other refinery units. Thus, various ratios between the components can occur and the process is designed for operation with both very high and very low content of cycloparaffins. While aromatics and paraffins pass the process substantially unchanged, cycloparaffins are selectively dehydrogenated to aromatics and hydrogen by the process of the invention.

Dehydrogenation reaction should proceed under thermodynamically favourable conditions, i.e. temperatures at least 300°C. As regards the catalyst stability, it might be beneficial to proceed at temperatures not above 700°C and in the presence of hydrogen with a molar hydrogen to hydrocarbon ratio between 0.1 and 10. Other favourable conditions are a total pressure varying between 1 and 100 bar and liquid space velocity LHSV between 0.1 to 1000 h⁻¹. The preferred conditions are temperatures between 350-550°C, LHSV between 5-50 h⁻¹, pressure between 5-50 bar and a molar hydrogen/hydrocarbon ratio between 1 and 5.

The catalyst used for dehydrogenation of cycloparaffins in presence of branched paraffins without their cracking comprises Group VIII metal on a support, which is not acidic or which has only very moderate acidity, lower than acidity of for example silico-alumina. The concentration of strong acidic sites on a catalyst is defined by ammonia desorption at temperatures higher than 200°C. This concentration of the catalyst of the invention must be lower than 1 µmole/g. The support used for this application can be for example silica, alumina, titania, zirconia or mixture of these or other oxides as well as various carbons, carbides, nitrides etc.

Any metal of group VIII of the periodical system of elements can be used. However, the most typical materials would be Pt, Pd, Ir, Rh or a mixture thereof. The loading of the metal can vary between 0.01% and 5% by weight, preferably between 0.1% and 1% by weight.

Dehydrogenation selectivity of the catalyst under the above specified favourable reaction conditions approaches 100% with substantially no effect on present paraffins, which pass reactor non-effected.

Dehydrogenation of cycloparaffins can be combined in a multi-stage process with isomerisation without substantial cracking of produced multi-branched hydrocarbons.

In such case, the multi-stage process comprises dehydrogenation of the invention for conversion of cycloalkanes to hydrogen and aromatics without cracking paraffins, formation of branched isomers, isomerisation, and separation of multi-branched isomers and aromatics using e.g. distillation, molecular sieve membranes, simulated moving bed or pressure swing adsorption.

In addition to formation of multi-branched paraffins in the isomerisation process, also conversion of cyclo-pentane derivates to cyclo-hexane derivates takes place.

The typical examples of suitable catalysts for isomerisation of C₆₊ paraffins may comprise porous materials based on tungsten oxide or tungsten containing compounds both supported and unsupported. The materials are porous having a pore size of 2-50 nm, i.e. mesoporous. The tungsten content is typically between 5% and 50% by weight. Tungsten oxide catalysts supported on zirconia, alumina, silica, hafnia, titania or SnO₂ or mixtures of these are of main interest. However, in principle, all oxides of group VI elements supported on group IV oxides are potential candidates for the application. Yet another group of materials applicable are heteropoly acids consisting of Keggin-ion-structures. The most typical examples are phosphotungstic and silicotungstic acids. Friedel-Crafts catalysts based on AlCl₃ can also be used for this application. Also various zeolites such as zeolite Beta and Sapo-11 can be used. The catalyst for C₆₊ isomerisation must contain 0.01 wt% to 2 wt% of noble metal. The noble metal would be most typically Pt or Pd or a mixture thereof. The reaction proceeds in the presence of hydrogen with a molar hydrogen to hydrocarbon ratio between 0.1 to 5 at the temperature range from 150°C to 300°C with total pressure varying between 1 and 40 bar and liquid space velocity LHSV between 0.1 to 30 h⁻¹.

There are several methods to separate aromatics and multi-branched isomers from the low octane components like mono and linear paraffins. For example, US patent No. 6,156,950 describes two-stage unit, which uses zeolite A to separate linear isomers and MFI zeolite in the next stage to separate multi-branched products and cyclic compounds. Although the main purpose was to remove cycloparaffins and aromatics, a product stream was obtained where linear and mono-branched molecules were only 10% of the paraffins fraction. U.S. Patent No. 4,925,459 describes use of zeolite incorporated in polymer for separation of pentanes. U.S. Patent No. 6,156,950 shows that linear molecules can also be separated on zeolite layer supported on ceramics. Yet another process is the use of chromatography on various zeolite adsorbents. The separation proceeds by passing the hydrocarbon mixture through the column filled with molecular sieve and the separated streams of products are withdrawn in the end of the column. US patent Nos. 5,770,783 and 5,744,684 describe a process based on reactive chromatography, when molecular sieve is mixed with the isomerisation catalyst to combine separation and reaction step together. Simulated moving bed is the similar option. Both these methods provide higher selectivities, but are more difficult to operate than the other mentioned methods. The choice of the suitable separation technology is not limited to the above mentioned examples.

### DETAILED DESCRIPTION OF THE DRAWINGS

The total process scheme can be based on the combination of the two reaction steps described in the above paragraphs and at least one separation step. All these steps can be combined in various ways.

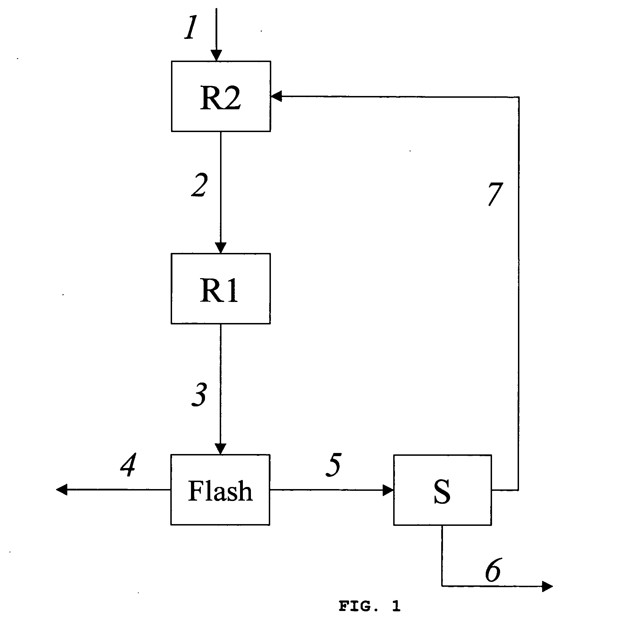

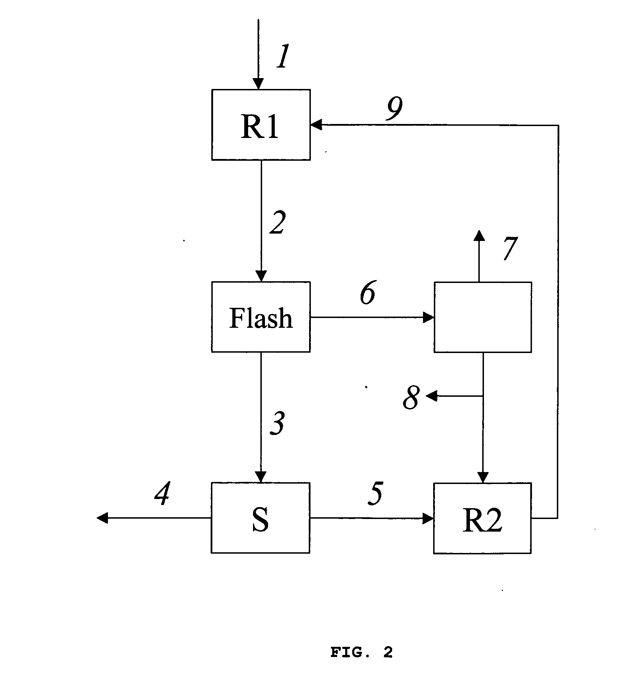

In order to further illustrate the invention, two embodiments are described below on FIG. 1 and FIG. 2, where R1 is the dehydrogenation step and R2 is the isomerisation step.

The first embodiment is shown schematically in FIG 1. This process is especially suited for feed containing low amounts of aromatics. The hydrocarbon feedstock is passed via line 1 to the isomerisation unit R2. In R2 linear paraffins and mono-branched paraffins are isomerised to multi-branched paraffins simultaneously with cyclo-pentane derivates being converted to cyclo-hexane paraffins. The effluent from R2 comprising multi-branched isomers and cycloparaffins is passed in line 2 to the dehydrogenation unit R1.

In R1 the dehydrogenation process of the invention will convert cyclo-alkanes to aromatic compounds without any conversion of the multi-branched paraffins. Since cyclo-hexane derivates are far more reactive in the dehydrogenation reaction than cyclo-pentane derivates, the isomerisation of cyclo-pentane derivates to cyclo-pentane derivates in the isomerisation step favours conversion to aromatics in the dehydrogenation step.

The effluent from R1 is passed via line 3 to a flash section, from where gases leave the process in line 4. The fluid gasoline phase is passed from the flash section via line 5 to separation step S, where the high octane number product, comprising aromatics and multi-branched paraffins, is separated from a recycle stream. The product leaves the process via line 6 and the recycle stream consisting predominantly of non-converted cyclo-alkanes, linear and mono-branched paraffins, is via line 7 led to R2.

The dehydrogenation of the invention used in this process makes it possible first to create multi-branched paraffins from the feed and from the recycle and then to improve the gasoline by converting cyclo-alkanes to aromatics without cracking the multi-branched paraffins.

By this, only non-converted cyclo-alkanes, linear and mono-branched paraffins are recycled. The product can contain 90% of the multi-branched paraffins and only 10% of the mono-branched paraffins, the rest is recycled to the isomerisation.

Another embodiment is shown on FIG. 2. This process is particularly useful for feed containing large amounts of cyclic compounds. In this case the hydrocarbon feedstock is passed via line 1 to the dehydrogenation unit R1, where the cyclic compounds are converted to aromatic compounds. The effluent from R1 comprising predominantly linear, mono-branched and multi-branched isomers and aromatics is passed via line 2 to a flash unit. Here gas and hydrogen flash off, while the liquid phase gasoline flows via line 3 to a separation unit, S. In S, the product is separated from the remainder part of the gasoline.

From S, the product comprising aromates, multi-branched paraffins and a small amount of cyclo-branched and mono-branched paraffins is withdrawn in line 4. The separation is carried out so 90% of the multi-branched paraffins and only 10% of the mono-branched paraffins leave the process in the product stream 4. The remainder, comprising mainly non-converted cyclic compounds, linear and mono-branched paraffins, is passed via line 5 to the isomerisation unit, R2, where these paraffins are converted to multi-branched paraffins.

As mentioned above, in the flash unit hydrogen and gas are separated from the gasoline. This gas and hydrogen is passed in line 6 to a separation, where the gas is withdrawn from the process via line 7. The hydrogen stream is split-up in a stream corresponding to the produced amount of surplus, which is withdrawn in line 8 and in a stream, which supplies the isomerisation unit R2 with the required amount of hydrogen.

In R2 the linear and mono-branched paraffins are converted to multi-branched paraffins and cyclo-pentane derivates to cyclo-hexane derivates, and the effluent is passed via line 9 to the dehydrogenation R1. The dehydrogenation of the invention will then create aromatic compounds without converting the produced multi-branched paraffins.

The advantage of using the dehydrogenation of the invention in this process, shown on FIG 2, is that the invention makes it possible to convert the cyclo-alkanes to aromatic compounds without destroying the valuable multi-branched paraffins. And thereafter to separate the high octane number product from the recycle stream which then can be isomerised.

Thereby, isomerisation takes place without any aromatic compounds being present and thereby hydrogenation of these aromatic compounds to cyclic compounds is avoided.

As apparent from the above description, the invention makes it possible to produce high-octane gasoline in a process with few steps.

### Example 1

10 g of commercial alumina MAG-42 (Sasol Ltd) are impregnated with 0.7% Pt, 0.3% Pd and calcined at 350°C. Afterwards, the catalyst was exchanged with 1 N Na₂CO₃ solution.

The feed used in the reaction is a C₇ cut consisting of 36 wt% methylcyclohexane and 64% of heptanes. The detail composition is shown in Table 1. The reaction is performed in a fixed bed reactor at 400°C with LHSV=1 h⁻¹ at the total pressure of 7 bar and the feed consisting of a hydrocarbon:hydrogen mixture with the molar ratio of 1:4. The detailed feed and product compositions are shown in Table 1.

The example shows that cycloparaffins can be selectively converted to aromatics in presence of branched paraffins without cracking them to gas. Such reaction results in significantly higher octane number of the product.

**Table 1**

| Feed and product compositions referring to dehydrogenation of Example 1 | | |
|---|---|---|
| | **Feed [wt%]** | **Product [wt%]** |
| Methane | - | 0.07 |
| Propane | - | 0.15 |
| Isobutane | - | 0.17 |
| Hexanes | - | 0.26 |
| Benzene | - | 0.15 |
| Cyclohexane | - | 0.03 |
| 2,4-dimethylpentane | 43.9 | 41.0 |
| 3,3-dimethylpentane | 0.2 | 0.3 |
| 2-methylhexane | 0.3 | 0.3 |
| 2,3-dimethylpentane | 17.8 | 18.3 |
| 3-methylhexane | - | 0.3 |
| 3-ethylpentane | - | - |
| n-heptane | - | 0.1 |
| Methylcyclohexane | 36.0 | 3.8 |
| Toluene | - | 35.1 |
| | | |
| RON - calculated | 79.9 | 91.1 |

### Example 2

10 g of commercial alumina MAG-42 are impregnated with 0.05% Pt and 0.05% Rh and calcined at 350°C. Afterwards, the catalyst was treated with 1% wt of KCl and excess of water evaporated.

The feed used in the reaction is a C₇ cut consisting of 37 wt% methyl-cyclohexane and 63% of n-heptane. The detailed composition is shown in Table 2. The reaction is performed in a fixed bed reactor at 400°C with LHSV=120 h⁻¹ at the total pressure of 10 bar and the feed consisting of a hydrocarbon:hydrogen mixture with the ratio of 1:2. The detailed feed and product compositions are shown in Table 2.

The example shows that cycloparaffins can be selectively converted to aromatics in presence of linear paraffins without cracking them to gas. Such reaction results in significantly higher octane number of the product.

**Table 2**

| Feed and product compositions referring to dehydrogenation of Example 2 | | |
|---|---|---|
| | **Feed [wt%]** | **Product [wt%]** |
| Methane | - | 0.05 |
| Propane | - | 0.03 |
| Butanes | - | 0.15 |
| Hexanes | 0.1 | 0.15 |
| Benzene | - | - |
| Cyclohexane | - | - |
| 2,4-dimethylpentane | - | - |
| 3,3-dimethylpentane | - | - |
| 2-methylhexane | - | 0.1 |
| 2,3-dimethylpentane | - | - |
| 3-methylhexane | - | 0.2 |
| 3-ethylpentane | - | - |
| n-heptane | 62.8 | 62.1 |
| Methyl-cyclohexane | 37.1 | 1.6 |
| Toluene | - | 35.6 |
| | | |
| RON - calculated | 27.9 | 42.5 |

### Example 3

Zirconium oxide was prepared by adding diluted ammonia to a water solution of zirconyl nitrate and adjusting pH to 9. The mixture was refluxed overnight. The white solid was filtered and washed and dried overnight at 120°C. The dried material had surface area of 333 m²/g. 225 g of zirconia, 168 g alumina gel (pseudoboehmite 30 wt%) and 62 g of ammonium metatungstate were milled for 15 minutes and 1/16" extrudates were prepared under 12 bar pressure. The catalyst was calcined at 700°C for three hours and 0.5 wt% Pd was introduced by incipient wetness impregnation. The catalyst was calcined at 350°C before it was placed into the reactor.

Heptane isomerisation with the above described catalyst was performed in a fixed bed reactor at 165°C with LHSV=0.2 h⁻¹ at a total pressure of 7 bar and the feed consisting of a hydrogen:hydrocarbon mixture with the ratio of 1:2. A detailed description of the product composition is shown in Table 3.

The catalyst produced on a once-through basis 35.1% of multi-branched isomers with only 3.2% cracking (liquid yield 92%). Calculated RON of the multi-branched isomer fraction is 89.2.

**Table 3**

| n-Heptane isomerisation at 165°C with LHSV=0.2 h⁻¹ at a total pressure of 7 bar and the feed consisting of a hydrogen:hydrocarbon mixture of a ratio of 1:2 | |
|---|---|
| | **Product [wt%]** |
| Propane | 1.34 |
| Isobutane | 1.74 |
| n-Butane | 0.07 |
| Isopentane | 0.03 |
| Isohexanes | 0.03 |
| 2,2-dimethylpentane | 11.66 |
| 2,4-dimethylpentane | 9.02 |
| 2,2,3-trimethylbutane | 1.22 |
| 3,3-dimethylpentane | 4.84 |
| 2-methylhexane | 25.52 |
| 2,3-dimethylpentane | 8.32 |
| 3-methylhexane | 23.2 |
| 3-ethylpentane | 1.49 |
| n-heptane | 11.30 |
| Cycloheptanes | 0.10 |

## Claims

1. A process for production of high-octane gasoline from a C₆-C₁₀ hydrocarbon feed stream comprising the step of selective dehydrogenation of cycloparaffins, wherein the dehydrogenation takes place in presence of a catalyst comprising one or more Group VIII metal supported on a porous material with concentration of acidic sites lower than 1 µmole/g.

2. A process according to claim 1, wherein the catalyst in the dehydrogenation step comprises palladium, platinum, rhodium, iridium or mixtures thereof in an amount of 0.1 wt% to 1.0 wt% supported on a carrier material selected from silica, alumina, zirconia, titania, or mixtures thereof, other oxides, carbons, carbides and nitrides.

3. A process according to claim 1, wherein the dehydrogenation step is performed at temperatures between 350°C and 550°C, in presence of hydrogen, at a total pressure between 5 to 50 bar and with a hydrogen to hydrocarbon molar ratio between 1 to 5.

4. A process according to claim 1, comprising further steps of
catalytic isomerization step converting linear and mono-branched isomers to multi-branched paraffins and/or cyclo-pentane derivates to cyclo-hexane derivates, and
separation step separating aromatic compounds and multi-branched isomers from non-converted cyclo-alkanes, linear and mono-branched paraffins.

5. A process according to claim 4, wherein the catalyst in the isomerisation step comprises an acidic mesoporous material.

6. A process according to claim 5, wherein the mesoporous material comprises tungsten oxide supported on zirconia, titania, alumina, silica, hafnia or tin oxide or mixture thereof with tungsten content between 5 wt% to 50 wt% and palladium, platinum or mixtures thereof with a loading 0.01 wt% to 2 wt%.

7. A process according to claim 4, wherein the isomerisation step is performed in the presence of hydrogen with a hydrogen to hydrocarbon molar ratio between 0.1 to 5, in the temperature range 150°C to 300°C, at a total pressure between 1 and 40 bar and with a liquid space velocity LHSV between 0.1 to 30 h⁻¹.

8. A process according to claim 4, wherein the non-converted cyclo-alkanes, the linear and the mono-branched paraffins are separated from the multi-branched paraffins and the aromatic compounds and said non-converted cyclo-alkanes and linear and mono-branched paraffins are recycled to the isomerisation or to the dehydrogenation step.
